# EUROPEAN PATENT SPECIFICATION

(11) **EP 4 326 613 B1**
(45) Date of publication and mention of the grant of the patent: **05.11.2025**
(21) Application number: 22723281.6
(22) Date of filing: 20.04.2022
(51) Int. Cl.: B64C 27/59, B64C 13/30, F16P 5/00

(54) **UNPOWERED BREAKOUT LOCKING MECHANISM**
STROMLOSER AUSBRECHVERRIEGELUNGSMECHANISMUS
MÉCANISME DE VERROUILLAGE DE DÉCOLLEMENT NON MOTORISÉ

(30) Priority: 20.04.2021 US 202163177251 P
(43) Date of publication of application: 28.02.2024
(73) Proprietor: Moog Inc., East Aurora, NY 14052 (US)
(72) Inventor: ALLEN, Matthew, J., Buffalo, NY 14216 (US)
(74) Representative: Hey, Andrew Stuart
(86) International application number: PCT/US2022/025461
(87) International publication number: WO 2022/226012

(56) References cited:
- EP-A1- 0 574 365
- EP-A1- 3 018 384
- EP-A1- 3 739 230
- DE-A1- 102015 012 237
- DE-A1- 3 625 676
- US-A- 4 579 201
- US-A- 5 667 331
- US-A1- 2009 078 524
- US-A1- 2009 283 642
- US-A1- 2013 261 852
- US-A1- 2014 027 566
- US-A1- 2014 061 380

## Description

### TECHNICAL FIELD

The present invention relates generally to the field of flight control actuator systems, and more specifically to an unpowered force transfer disconnect or breakout mechanism for disconnecting an electrical flight control actuation system for an aircraft.

### BACKGROUND ART

Autopilot systems are known in the prior art. Such systems allow for the automated control of an aircraft along a selected flight path. Such systems may include one or more electric motors that drive the flight control surfaces of the aircraft.

It is also known that such systems may need to be disengaged under certain circumstances, such as when a motor or motor controller conveys an undesired drive force. Disengagement systems known in the prior art include electromagnetic clutches and manual disengagement systems.
Patent application publication DE 3625676 A1 relates to an overload element for restricting tensile and/or compressive forces of two portions which can be displaced with respect to each other in the event of overload and, in the force-transmitting position, are latched with respect to each other. Patent application publication US 2009/0283642 A1 relates to a breakable coupling device for coupling together first and second main transmission shafts stationary in translation along a longitudinal axis of rotation of the device, comprising a blocking device having a discontinuous first housing and a continuous second housing forming a closed loop; a compression device; at least one drive device connecting the blocking device and the compression device together in rotation about the longitudinal axis below a predetermined torque, wherein the discontinuous first housing is configured to receive the at least one drive device below the predetermined torque; and a shifting device configured to shift the at least one drive device non-reversibly from the discontinuous first housing towards the continuous second housing when the torque exerted on the at least one drive device is greater than the predetermined torque.

### SUMMARY

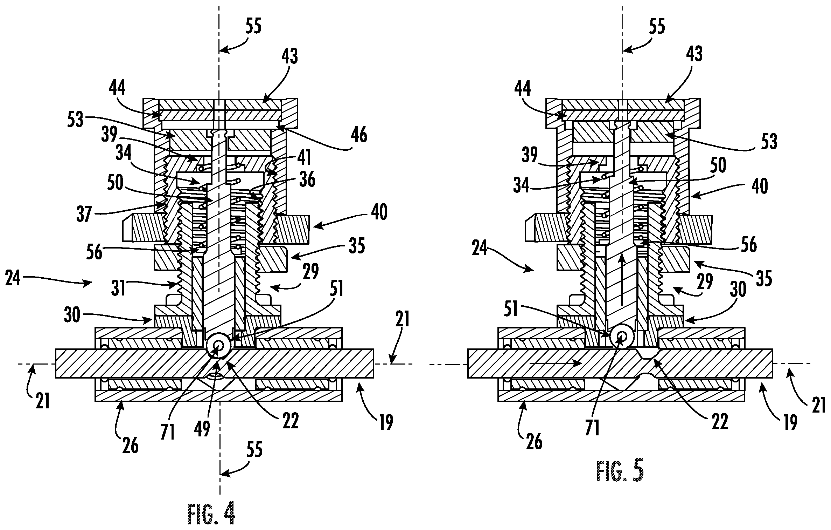

The present invention provides actuator transfer assemblies as set out in the independent claims. With parenthetical reference to the corresponding parts, portions or surfaces of the disclosed embodiment, merely for the purposes of illustration and not by way of limitation, the present disclosure provides an actuator transfer assembly (15) comprising an actuator (18), a driven object (16, 60, 116), a pushrod (19) configured to translate linearly and provide an axial force between the actuator (18) and the driven object (16, 60, 116), a disconnect housing (24) between the pushrod (19) and either the actuator (18) or the driven object (16, 60, 116), a transfer member (50) supported by the disconnect housing (24), the transfer member (50) movable relative to the disconnect housing (24) from a first position (FIG. 4) in mechanical engagement with the pushrod (19) at a mechanical interface (49) such that the disconnect housing (24) translates linearly with the pushrod (19) and a second position (FIG. 5) in mechanical disengagement from the pushrod (19) at the mechanical interface (49) such that the disconnect housing (24) does not translate linearly with the pushrod (19), a bias element (34) biasing the transfer member (50) towards the first position with the pushrod (19), a retainer (44, 53) configured to automatically retain the transfer member (50) in the second position when the transfer member (50) moves from the first position to the second position, and wherein the transfer member (50) is configured to move from the first position to the second position when an axial force on the pushrod (19) exceeds a predetermined threshold breakout force.

The transfer member may comprise a plunger (50) having a roller (51) at a first end and the pushrod (19) may comprise a detent (22) configured to receive the roller (51) at the mechanical interface (49). The retainer may comprise a magnet (44) connected to the disconnect housing (24) and a pole piece (53) connected to the transfer member (50), and the magnet (44) and the pole piece (53) may be configured such that a magnetic attractive force of the magnet (44) on the pole piece (53) exceeds an opposing bias force of the bias element (34) when the transfer member (50) is in the second position. The retainer may comprise a gap (46) between the magnet (44) and the pole piece (53) when the transfer member (50) is in the first position. The transfer member may comprise a plunger (50) having a roller (51) at a first end, the pushrod (19) may comprise a detent (22) configured to receive the roller (51) at the mechanical interface (49), and the pole piece may comprise a steel disc (53) at a second end of the plunger (50).

The actuator transfer assembly may comprise a magnetic force adjustment mechanism (40) configured to adjust the magnetic attractive force of the magnet (44) on the pole piece (53) when the transfer member (50) is in the second position, and a bias force adjustment mechanism (35) configured to adjust the bias force of the bias element (34) on the transfer member (50) when the transfer member (50) is in the first position. The magnetic force adjustment mechanism may comprise a magnetic adjustment cup (40) supporting the magnet (44) and in direct or indirect threaded engagement with the disconnect housing (29) such that a gap (46) between the pole piece (53) and the magnet (44) when the transfer member (50) is in the first position may be adjusted by rotation of the magnetic adjustment cup (40) relative to the disconnect housing (24). The bias force adjustment mechanism may comprise a spring adjustment cup (35), the bias element may comprise a spring (34) in compression between the spring adjustment cup (35) and the transfer member (50), and the spring adjustment cup (35) may be in direct or indirect threaded engagement with the disconnect housing (29) such that the compression of the spring (34) between the spring adjustment cup (35) and the transfer member (50) when the transfer member (50) is in the first position may be adjusted by rotation of the spring adjustment cup (35) relative to the disconnect housing (29). The spring adjustment cup (35) may be in threaded engagement between the magnetic adjustment cup (40) and the disconnect housing (29) and the magnetic adjustment cup may be in indirect threaded engagement with the disconnect housing (29). An inner surface of the magnetic adjustment cup (40) may be in direct threaded engagement with an outer surface (37) of the spring adjustment cup (35) and an inner surface (36) of the spring adjustment cup (35) may be in direct threaded engagement with an outer surface (31) of the disconnect housing (29).

The actuator transfer assembly may comprise a bias force adjustment mechanism (35) configured to adjust the bias force of the bias element (34) on the transfer member (50) when the transfer member (50) is in the first position and comprising a spring adjustment cup (35) in direct threaded engagement with the disconnect housing (29) such that the bias force of the bias element (34) on the transfer member (50) when the transfer member (50) is in the first position may be adjusted by rotation of the spring adjustment cup (35) relative to the disconnect housing (29), and a magnetic force adjustment mechanism (40) configured to adjust the magnetic attractive force of the magnet (44) on the pole piece (53) when the transfer member (50) is in the second position and comprising a magnetic adjustment cup (40) supporting the magnet (44) and in direct threaded engagement with the spring adjustment cup (35) such that a gap (46) between the pole piece (53) and the magnet (44) when the transfer member (50) is in the first position may be adjusted by rotation of the magnetic adjustment cup (40) and/or the spring adjustment cup (35) relative to the disconnect housing (50). The inner surface (41) of the magnetic adjustment cup (40) may be in direct threaded engagement with an outer surface (37) of the spring adjustment cup (35), an inner surface (36) of the spring adjustment cup (35) may be in direct threaded engagement with an outer surface (31) of the disconnect housing (29), the threaded engagement of the inner surface (41) of the magnetic adjustment cup (40) and the outer surface (37) of the spring adjustment cup (35) may comprise a first thread pitch, and the threaded engagement of the inner surface (36) of the spring adjustment cup (35) and the outer surface (31) of the disconnect housing (29) may comprise a second thread pitch different from the first thread pitch.

The actuator transfer assembly may comprise a first linkage (32) between the disconnect housing (24) and the actuator (18) and a second linkage (60, 61, 161) between the pushrod (19) and the driven object (16, 116). The driven object may be selected from a group consisting of an aircraft flight control mechanism (60, 116) and an aircraft flight control surface (16). The driven object may comprise the aircraft flight control surface (16) and the aircraft flight control surface may be selected from a group consisting of an elevator, a rudder, an aileron, a flap, a slat, a stabilizer, and a spoiler. The driven object may comprise the aircraft flight control mechanism (60, 116) and the aircraft flight control mechanism may be selected from a group consisting of a helicopter main rotor blade, a helicopter tail rotor blade, a helicopter main rotor swashplate, and a helicopter tail rotor swashplate.

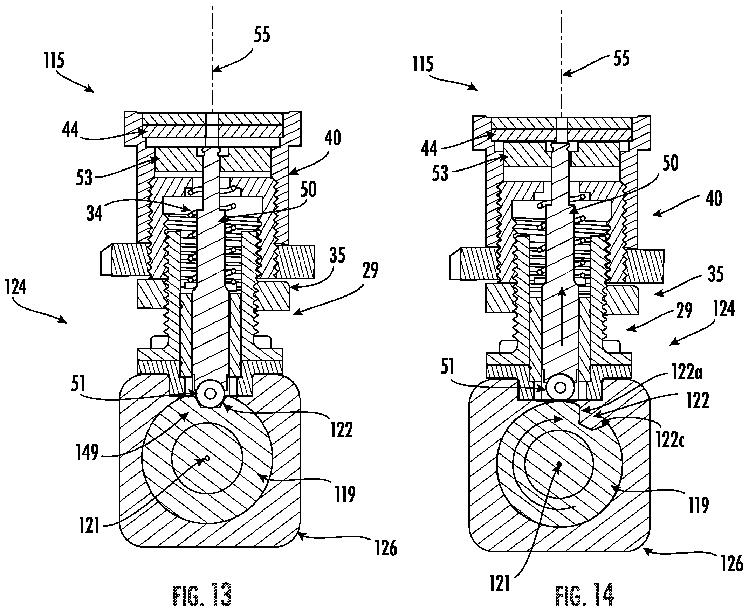

In another aspect, an actuator transfer assembly (115) is provided comprising an actuator (18), a driven object (16, 60, 116), a shaft (119) configured to rotate about an axis (121) and provide a torque between the actuator (18) and the driven object (16, 60, 116), a disconnect housing (124) between the shaft (119) and either the actuator (18) or the driven object (16, 60, 116), a transfer member (50) supported by the disconnect housing (16, 60, 116), the transfer member (50) movable relative to the disconnect housing (124) from a first position (FIG. 13) in mechanical engagement with the shaft (119) at a mechanical interface (149) such that the disconnect housing (124) rotates about the axis (121) with the shaft (119) and a second position (FIG. 14) in mechanical disengagement from the shaft (119) at the mechanical interface (149) such that the disconnect housing (124) does not rotate about the axis (121) with the shaft (119), a bias element (34) biasing the transfer member (50) towards the first position with the shaft (119), a retainer (44, 53) configured to automatically retain the transfer member (50) in the second position when the transfer member (50) moves from the first position to the second position, and wherein the transfer member (50) is configured to move from the first engaged position to the second disengaged position when a torque on the shaft (119) exceeds a predetermined threshold breakout torque.

The transfer member may comprise a plunger (50) having a roller (51) at a first end and the shaft (119) may comprise a detent (122) configured to receive the roller (51) at the mechanical interface (149). The retainer may comprise a magnet (44) connected to the disconnect housing (124) and a pole piece (53) connected to the transfer member (50), and the magnet (44) and the pole piece (53) may be configured such that a magnetic attractive force of the magnet (44) on the pole piece (53) exceeds an opposing bias force of the bias element (34) when the transfer member (50) is in the second position. The transfer member may comprise a plunger (50) having a roller (51) at a first end, the shaft (119) may comprise a detent (122) configured to receive the roller (51) at the mechanical interface (149), and the pole piece may comprise a steel disc (53) at a second end of the plunger (50).

The actuator transfer assembly may comprise a magnetic force adjustment mechanism (40) configured to adjust the magnetic attractive force of the magnet (44) on the pole piece (53) when the transfer member (50) is in the second position, and a bias force adjustment mechanism (35) configured to adjust the bias force of the bias element (34) on the transfer member (50) when the transfer member (50) is in the first position. The magnetic force adjustment mechanism may comprise a magnetic adjustment cup (40) supporting the magnet (44) and in direct or indirect threaded engagement with the disconnect housing (29) such that a gap (46) between the pole piece (53) and the magnet (44) when the transfer member (50) is in the first position may be adjusted by rotation of the magnetic adjustment cup (40) relative to the disconnect housing (124). The bias force adjustment mechanism may comprise a spring adjustment cup (35), the bias element may comprise a spring (34) in compression between the spring adjustment cup (35) and the transfer member (50), and the spring adjustment cup (35) may be in direct or indirect threaded engagement with the disconnect housing (29) such that the compression of the spring (34) between the spring adjustment cup (35) and the transfer member (50) when the transfer member (50) is in the first position may be adjusted by rotation of the spring adjustment cup (35) relative to the disconnect housing (29). The spring adjustment cup (35) may be in threaded engagement between the magnetic adjustment cup (40) and the disconnect housing (29) and the magnetic adjustment cup (40) may be in indirect threaded engagement with the disconnect housing (29). An inner surface (41) of the magnetic adjustment cup (40) may be in direct threaded engagement with an outer surface (37) of the spring adjustment cup (35) and an inner surface (36) of the spring adjustment cup (35) may be in direct threaded engagement with an outer surface (31) of the disconnect housing (29).

The actuator transfer assembly may comprise a bias force adjustment mechanism (35) configured to adjust the bias force of the bias element (34) on the transfer member (50) when the transfer member (50) is in the first position and comprising a spring adjustment cup (35) in direct threaded engagement with the disconnect housing (29) such that the bias force of the bias element (34) on the transfer member (50) when the transfer member (50) is in the first position may be adjusted by rotation of the spring adjustment cup (35) relative to the disconnect housing (29), and a magnetic force adjustment mechanism (40) configured to adjust the magnetic attractive force of the magnet (44) on the pole piece (53) when the transfer member (50) is in the second position and comprising a magnetic adjustment cup (40) supporting the magnet (44) and in direct threaded engagement with the spring adjustment cup (35) such that a gap (46) between the pole piece (53) and the magnet (44) when the transfer member (50) is in the first position may be adjusted by rotation of the magnetic adjustment cup (40) and/or the spring adjustment cup (35) relative to the disconnect housing (50). The inner surface (41) of the magnetic adjustment cup (40) may be in direct threaded engagement with an outer surface (37) of the spring adjustment cup (35), an inner surface (36) of the spring adjustment cup (35) may be in direct threaded engagement with an outer surface (31) of the disconnect housing (29), the threaded engagement of the inner surface (41) of the magnetic adjustment cup (40) and the outer surface (37) of the spring adjustment cup (35) may comprise a first thread pitch, and the threaded engagement of the inner surface (36) of the spring adjustment cup (35) and the outer surface (31) of the disconnect housing (29) may comprise a second thread pitch different from the first thread pitch.

The actuator transfer assembly may comprise a first linkage (32) between the disconnect housing (124) and the actuator (18) and a second linkage (60, 61, 161) between the shaft (119) and the driven object (16, 116). The driven object may be selected from a group consisting of an aircraft flight control mechanism (60, 116) and an aircraft flight control surface (16). The driven object may comprise the aircraft flight control surface (16) and the aircraft flight control surface may be selected from a group consisting of an elevator, a rudder, an aileron, a flap, a slat, a stabilizer, and a spoiler. The driven object may comprise the aircraft flight control mechanism (60, 116) and the aircraft flight control mechanism may be selected from a group consisting of a helicopter main rotor blade, a helicopter tail rotor blade, a helicopter main rotor swashplate, and a helicopter tail rotor swashplate.

### BRIEF DESCRIPTION OF THE DRAWINGS

FIG. 1 is schematic view of a first embodiment of a disconnect mechanism in an electrical flight control surface actuation system for an aircraft.
FIG. 2 is perspective view of the disconnect mechanism shown in FIG. 1.
FIG. 3 longitudinal vertical perspective cross-sectional view of the disconnect mechanism shown in FIG. 2.
FIG. 4 is a front cross-sectional view of the disconnect mechanism shown in FIG. 3 in an engaged or connected position.
FIG. 5 is a front cross-sectional view of the disconnect mechanism shown in FIG. 3 in a disengaged, retracted or disconnected position.
FIG. 6 is an enlarged cross-sectional view of the disconnect mechanism shown in FIG. 3.
FIG. 7 is an enlarged cross-sectional view of the disconnect mechanism shown in FIG. 6 with a second embodiment of the pushrod.
FIG. 8 is a longitudinal vertical partial cross-sectional view of the proximity sensor shown in FIG. 3 when in an engaged position.
FIG. 9 is a longitudinal vertical partial cross-sectional view of the proximity sensor shown in FIG. 3 when in a disengaged position.
FIG. 10 is a partial perspective view of the housing and plunger shown in FIG. 3.
FIG. 11 is a schematic view of the disconnect mechanism shown in FIG. 1 in an electrical flight control mechanism for an aircraft.
FIG. 12 is a schematic view of the disconnect mechanism shown in FIG. 1 in an alternative connected arrangement.
FIG. 13 is a longitudinal vertical cross-sectional view of an alternative rotational embodiment the disconnect mechanism shown in FIG. 4 in an engaged position.
FIG. 14 is a longitudinal vertical cross-sectional view of the disconnect mechanism shown in FIG. 13 in a disengaged position.

### DETAILED DESCRIPTION OF THE EMBODIMENTS

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (e.g., cross-hatching, arrangement of parts, proportion, degree, etc.) together with the specification, and are to be considered a portion of the entire written description of this invention. As used in the following description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

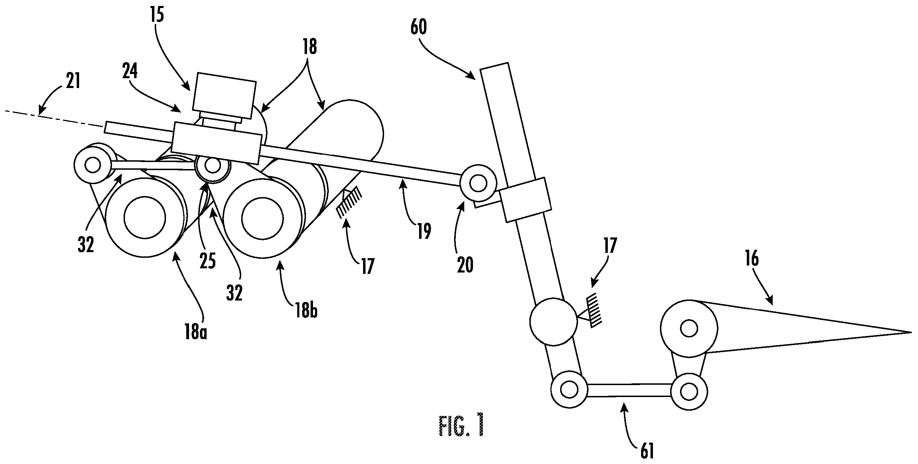

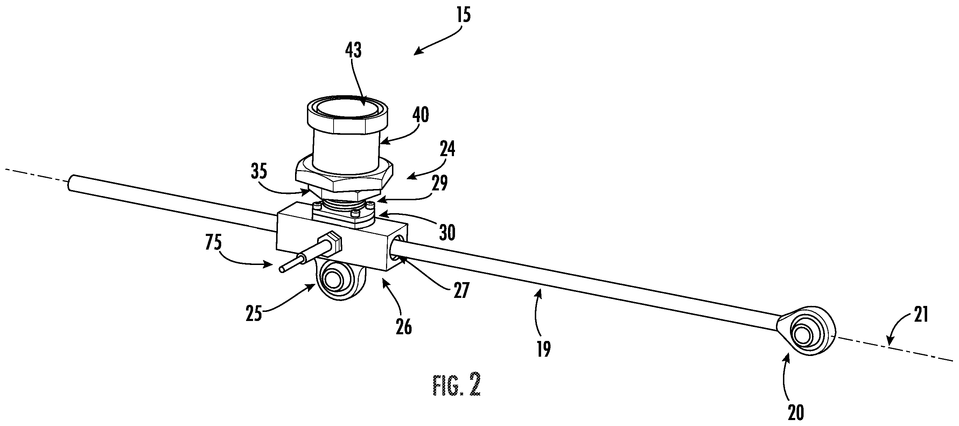

Referring now to the drawings, an improved disconnect mechanism is provided, a first linear embodiment of which is generally indicated at 15 and a second rotary embodiment of which is generally indicated at 115. With reference to FIGS. 1-3, disconnect mechanism 15 allows the transmission of a linear force through pushrod 19 up to an adjustable or tunable threshold force level. Force applied along pushrod axis 21 and applied to mechanism 15 that exceeds a threshold force causes mechanism 15 to disengage from pushrod 19, thereby preventing further transmission of axial force and allowing free sliding at the interface between pushrod 19 and mechanism 15. This disengagement, or "breakout," is automatically latched or locked until it is reset. Mechanism 15 may be adjusted to achieve breakout and latching at a range of threshold forces.

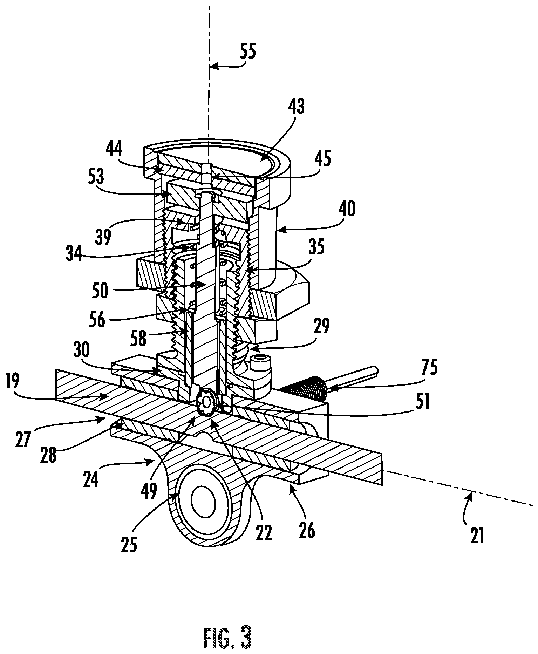

As shown in FIG. 3, mechanism 15 generally comprises housing 24 in sliding engagement with pushrod 19 along axis 21 and plunger 50 in sliding engagement with housing 24 along axis 55, which is perpendicular to axis 21. As shown in FIG. 1, in a first embodiment housing 24 is mechanically coupled to rotary actuators 18a and 18b at spherical bearing connection 25 via linkage 32 such that actuators 18 may apply a linear force to housing 24 along axis 21. Pushrod connection 20 is mechanically coupled to vehicle control stick 60 at spherical bearing connection 20 and control stick 60 is in turn mechanically coupled to flight control surface 16 via linkage 61.

As shown, housing 24 generally comprises spherical bearing connection 25, tubular portion 26 orientated about axis 21 and defining cylindrical channel 27, hollow cylindrical tower plate 30 orientated about axis 55 and extending through tubular portion 27 opposite to connection 25, hollow cylindrical tower 20 supported by tower plate 30 and orientated about axis 55, hollow cylindrical spring adjustment cup 35 supported by tower 29 and orientated about axis 55, hollow cylindrical magnet adjustment cup 40 supported by spring adjustment cup 35 and orientated about axis 55, circular end cap 43 supported by magnet adjustment cup 40 and orientated about axis 55, and magnet 44 orientated about axis 55 and fixed to the bottom surface of end cap 43. Annular bearings 28 between the outer cylindrical surface of pushrod 19 and the inner cylindrical surface of tubular portion 26 allow for linear sliding movement of pushrod 19 in channel 27 of housing 24.

Plunger 50 is a generally solid cylindrical member orientated about axis 55 and comprises roller 51 at an end proximate to pushrod 19, cylindrical pole piece 53 at the end of plunger 50 proximate to magnet 44 and opposite to roller 51, and spring seat 56 between roller 51 and pole piece 53. Annular bearings 58 between the outer cylindrical surface of plunger 50 and the inner cylindrical surface of tower 29 allow for linear sliding movement of plunger 50 in tower 29 of housing 24. Plunger 50 is spring loaded, with coil spring 34 orientated about plunger 50 and axis 55 and compressed between annular spring seat 39 of spring adjustment cup 35 and annular spring seat 56 of plunger 50.

With reference to FIGS. 1-7, a force applied by actuators 18 to housing 24 via spherical bearing 25 of housing 24 is transmitted into pushrod 19 through roller-detent interface 49. Pushrod 19 includes annular radially-extending detent or groove 22 with frusto-conical sloped walls 22a and 22c. Ball bearing roller 51 of spring-loaded plunger 50 is configured to engage pushrod detent 22 when aligned axially along axis 21 with pushrod detent 22, as shown in FIGS. 3, 4, 6 and 7.

As shown in FIG. 4, when roller 51 of spring loaded plunger 50 engages pushrod detent 22 of pushrod 19 at interface 49, a force applied to pushrod 19 along its horizontal longitudinal axis 21 causes a resultant force on plunger 50 with a component along vertical axis of translation 55 of plunger 50. The ratio of pushrod force to plunger force is a function of contact angle 70 between roller end 51 of plunger 50 and detent walls 22a and 22c of detent 22 of pushrod 19. As shown in FIG. 5, when the axial force applied to pushrod 19 is higher than a desired threshold, the resultant vertical force on plunger 50 will overcome the opposed spring preload of spring 34 on plunger 50 and cause plunger 50 to translate up out of detent or groove 22 in pushrod 19, which constitutes a "breakout" or disengagement.

Upon breakout or disengagement, plunger 50 automatically latches in the disengaged position shown in FIG. 5 and pushrod 19 slides freely axially in channel 27 through housing 24 until the latch is reset. In particular, when plunger 50 is forced out of detent 22, or retracted, steel pole piece 53 affixed to the top end of plunger 50 is translated into close proximity to disc magnet 44 positioned in end cap 43 of housing 24 at a preset distance above the top of plunger 50. The attractive force between magnet 44 and plunger pole piece 53 rises sharply with the inverse of gap distance 46 between them. The location of magnet 44 may be adjusted such that the magnetic attractive force on pole piece 53 of plunger 50 is sufficient to overcome the opposing preload spring force of spring 34 when plunger 50 is in the retracted or disengaged position. When a breakout occurs, magnet 44 automatically captures plunger pole piece 53, and plunger 50 is automatically retained in the disengaged position and held from re-engaging detent 22 of pushrod 19 in the event that pushrod 19 axially realigns below roller 51 of plunger 50.

In order to reset the breakout, first pushrod detent 22 is aligned below plunger 50. Force is then applied to the top of plunger 50 via reset port 45 sufficient to overcome the magnetic attraction between plunger pole piece 53 and magnet 44, allowing plunger 50 to spring load back into detent 22 of pushrod 19 below it.

In this embodiment, the amount of force required to disengage plunger 50 from pushrod 19 at interface 49 may be mechanically adjusted in a number of different ways. First, a spring 34 with the desired spring force may be selected. Selection of a spring 34 with a higher maximum spring load increases the maximum possible pushrod breakout force proportionally.

Second, an adjustment of the spring preload may be provided via spring adjustment cup 35. As shown in FIGS. 3-5 above, in this embodiment housing 24 includes threaded spring adjustment cup 35 having threaded inner surface 36 in engagement with correspondingly threaded outer surface 31 of housing tower 29. Spring adjustment cup 35 which may be rotated or screwed down relative to housing tower 29 to compress spring 34 and increase the preload of spring 34 and, in turn, the pushrod breakout force. Spring adjustment cup 35 may be rotated the opposite direction relative to housing tower 29 to decompress spring 34 and decrease the preload of spring 34 and, in turn, the pushrod breakout force.

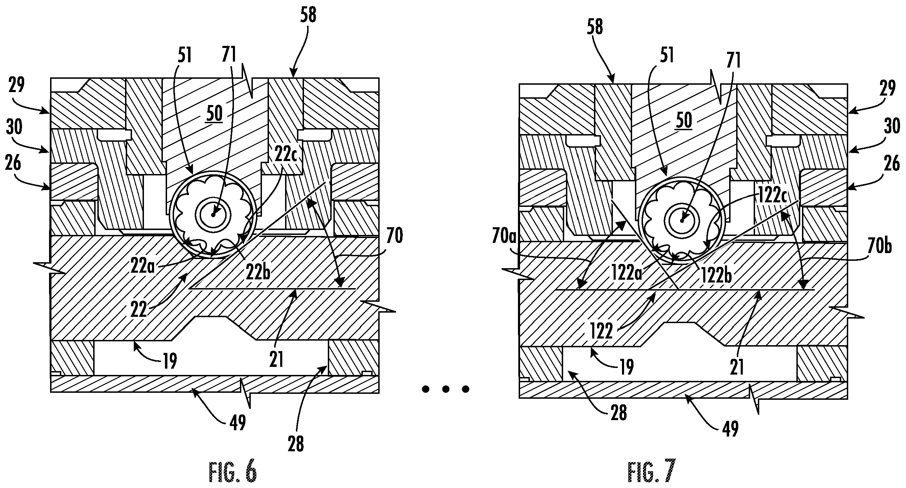

Third, roller-detent contact angle 70 between plunger 50 and pushrod 19 at interface 49 may be varied as desired. As shown in FIGS. 5 and 6, a pushrod detent geometry that results in a steeper contact angle 70, which as shown is the angle between the longitudinal axis 21 of pushrod 19 and a tangent to roller 51 at contact with detent 22, increases the pushrod force required to disengage for a given preload spring force. In the embodiment shown in FIG. 6 for example, and without limitation, contact angle 70 may be about 45 degrees. As also shown, the breakout force required in one axial direction along axis 21 may be selectively varied from the breakout force required in the opposite axial direction along axis 21 by selectively varying the contact angle between the left frusto-conical surface and the right frusto-conical surface of the detent. For example, in the embodiment shown in FIG. 7, left frusto-conical surface 122a of detent 122 may have a greater contact angle 70a than contact angle 70b of right frusto-conical surface 122b of detent 122. For example, and without limitation, contact angle 70a may be about 45 degrees and contact angle 70b may be about 30 degrees. Thus, the breakout force to the right on pushrod 19 is less than the breakout force to the left on pushrod 19.

The holding force of the latch and magnetic gap 46 may be adjusted via magnet adjustment cup 40. As shown in FIGS. 3-5 above, in this embodiment housing 24 includes threaded magnet adjustment cup 40 having threaded inner surface 41 in engagement with correspondingly threaded outer surface 37 of spring adjustment cup 35. Magnet adjustment cup 40 may be rotated or screwed down on spring adjustment cup 35 and relative to housing tower 29 to decrease gap 46 and increase the magnetic attraction force between magnet 44 of housing 24 and pole piece 53 of plunger 50 when plunger 50 is in an extended position. Magnet adjustment cup 40 may be rotated in the opposite direction on spring adjustment cup 35 and relative to housing tower 29 to increase gap 46 and decrease the magnetic attraction force between magnet 44 of housing 24 and pole piece 53 of plunger 50 when plunger 50 is in an extended position.

It should be noted that, in this embodiment, spring adjustment cup 35 could be rotated or screwed down relative to housing tower 29 to decrease gap 46 and increase the magnetic attraction force between magnet 44 of housing 24 and pole piece 53 of plunger 50 when plunger 50 is in an extended position, although this would also compress spring 34 and increase the preload of spring 34 and, in turn, the pushrod breakout force. Spring adjustment cup 35 may also be rotated the opposite direction relative to housing tower 29 to increase gap 46 and decrease the magnetic attraction force between magnet 44 of housing 24 and pole piece 53 of plunger 50 when plunger 50 is in an extended position, although this would also decompress spring 34 and decrease the preload of spring 34 and, in turn, the pushrod breakout force.

It should also be noted that, in an embodiment, an adjustment of the spring preload may be provided via spring adjustment cup 35 without any adjustment of gap 46 and the magnetic attraction force between magnet 44 of housing 24 and pole piece 53 of plunger 50 when plunger 50 is in an extended position. In such an embodiment, the thread pitch of threaded inner surface 36 of spring adjustment cup 35 and corresponding threaded outer surface 31 of housing tower 29 is the same as the thread pitch of threaded inner surface 41 of adjustment cup 40 and correspondingly threaded outer surface 37 of spring adjustment cup 35. With such equal thread pitch, magnet adjustment cup 40 may be restrained from rotating relative to tower 29 while spring adjustment cup 35 is rotated or screwed down relative to housing tower 29 to compress spring 34 and increase the preload of spring 34 and, in turn, the pushrod breakout force, without any resulting change in gap 46 and the magnetic attraction force between magnet 44 of housing 24 and pole piece 53 of plunger 50 when plunger 50 is in an extended position. Magnet adjustment cup 40 may be restrained from rotating relative to tower 29 while spring adjustment cup 35 is rotated the opposite direction relative to housing tower 29 to decompress spring 34 and decrease the preload of spring 34 and, in turn, the pushrod breakout force, without any resulting change in gap 46 and the magnetic attraction force between magnet 44 of housing 24 and pole piece 53 of plunger 50 when plunger 50 is in an extended position.

It should also be noted that, in an embodiment, an adjustment of gap 46 and the magnetic attraction force between magnet 44 of housing 24 and pole piece 53 of plunger 50 when plunger 50 is in an extended position may be provided via spring adjustment cup 35 without any rotation of magnet adjustment cap 40. In such an embodiment, the thread pitch of threaded inner surface 36 of spring adjustment cup 35 and corresponding threaded outer surface 31 of housing tower 29 is different from the thread pitch of threaded inner surface 41 of adjustment cup 40 and correspondingly threaded outer surface 37 of spring adjustment cup 35. With such unequal thread pitch, magnet adjustment cup 40 may be restrained from rotating relative to tower 29 while spring adjustment cup 35 is rotated or screwed down relative to housing tower 29 to decrease gap 46 and increase the magnetic attraction force between magnet 44 of housing 24 and pole piece 53 of plunger 50 when plunger 50 is in an extended position, although this would also compress spring 34 by an amount dependent on the difference in pitch thread between spring adjustment cup 35 and housing tower 29 and adjustment cup 40 and spring adjustment cup 35. Magnet adjustment cup 40 may be restrained from rotating relative to tower 29 while spring adjustment cup 35 is rotated the opposite direction relative to housing tower 29 to decrease gap 46 and increase the magnetic attraction force between magnet 44 of housing 24 and pole piece 53 of plunger 50 when plunger 50 is in an extended position, although this would also decompress spring 34 by an amount dependent on the difference in pitch thread between spring adjustment cup 35 and housing tower 29 and adjustment cup 40 and spring adjustment cup 35.

Other spring and magnet adjustment configurations may be employed as alternatives. For example, and without limitation, housing tower 29 may be provided with a threaded internal surface as well as a threaded external surface 31. A threaded external surface of the spring adjustment cup may be in direct threaded engagement with the threaded internal surface of the housing tower such that the spring adjustment cup may be internally rotated relative to the tower to adjust the spring 34 reload. In addition, the threaded external surface of the housing tower may be in direct threaded engagement with the threaded internal surface of the magnet adjustment cup such that the magnet adjustment cup may be externally rotated relative to the housing tower to adjust the magnetic gap and magnetic attraction force between magnet 44 of housing 24 and pole piece 53 of plunger 50. Thus, alternative direct and indirect configurations and threaded interfaces may be provided among the housing tower, the spring adjustment cup and the magnet adjustment cup.

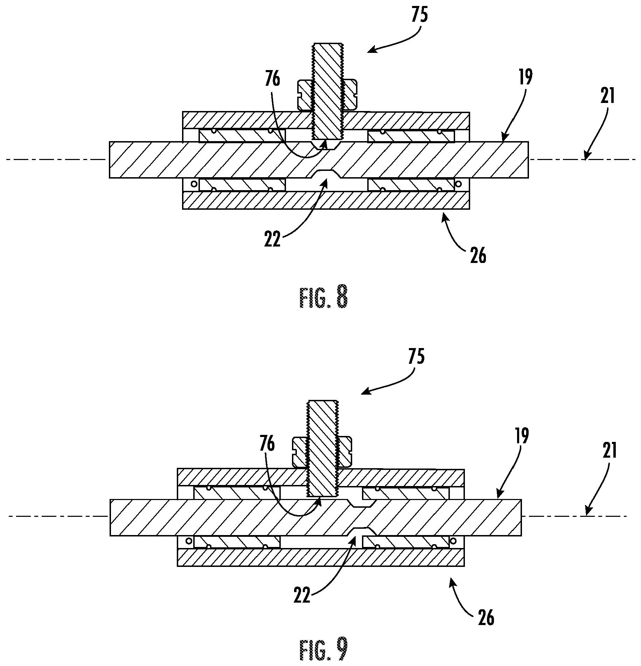

As shown in FIGS. 8 and 9, in this embodiment assembly 15 includes proximity sensor 75 for detecting a breakout or retraction of plunger 50. As shown in FIG. 8, when roller 51 of plunger 50 is engaged in annular detent 22 of pushrod 19, sensing head 76 of proximity sensor 75 aligns axially on axis 21 and radially about axis 21 with the annular air gap of detent 22 and sensor 75 outputs a low signal. As shown in FIG. 9, when a breakout occurs and plunger 50 retracts and detent 22 moves axially along axis 21 with pushrod 19 relative to housing 24, proximity sensor 75 is thereby triggered by the full diameter of pushrod 19 being axially aligned with sensor head 76, resulting in a higher output signal from sensor 75.

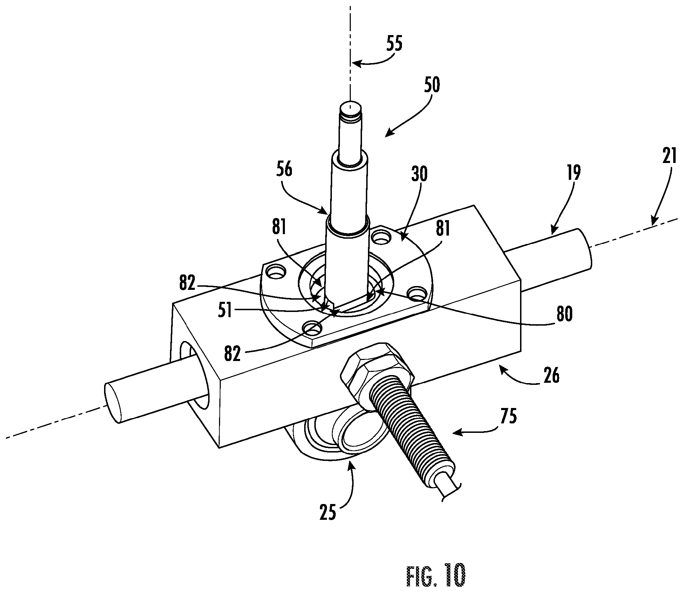

As shown in FIG. 10, roller 51 is clocked with its plane of rotation in line with pushrod axis 21. Roller 51 is held in an alignment such that axis of rotation 71 of roller 51 is perpendicular to pushrod axis 21. This allows roller 51 to roll with low friction out of detent 22 of pushrod 19 for a consistent breakout force. To provide this clocking, tower plate 30 includes clocking slot 80 having opposed slot faces 81 that are each in a plane parallel to the plane defined by axes 21 and axis 55. Plunger 50 includes a portion aligned along axis 55 with slot 80 and having flat faces 82 that are each in a plane parallel to the plane defined by axis 21 and axis 55 and which directly face and are constrained by slot faces 81, respectively. Plunger 50 is thereby restrained from rotating about axis 55 by planar faces 81 of clocking slot 80 of housing 24.

In this embodiment, actuators 18a and 18b are rotary electromechanical actuators generally comprising variable speed bidirectional electric servomotors. In particular, the motors are brushless D.C. variable-speed servo-motors with electronically controlled commutation systems that are supplied with a current and include resolver feedback to monitor rotor angle which is used for closed loop motion control in actuator control electronics. Each motor has an inner rotor with permanent magnets and a non-rotating stator with coil windings fixed to structure 17. When current is appropriately applied through the coils of the stator, a magnetic field is induced. The magnetic field interaction between the stator and the rotor generates torque which may rotate the output shaft of the motor. Actuators 18a and 18b provide dual force redundancy and the output shaft of each actuator 18a and 18b is connected to housing connection 25 via linkage 32. Other motors may be used as alternatives. For example, and without limitation, one or more stepper motors, brush motors, induction motors, rotary hydraulic actuators, or the like, may be used as alternatives.

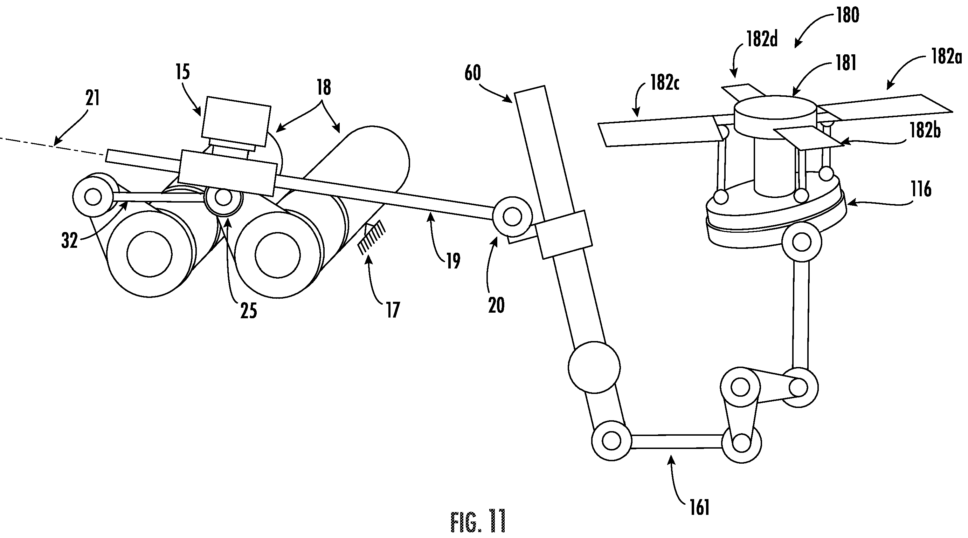

FIG. 11 is a schematic view of disconnect mechanism 15 coupled with electrical flight control mechanism 116 of an aircraft or rotorcraft. As shown in FIG. 11, in this embodiment housing 25 is again mechanically coupled to rotary actuators 18a and 18b at spherical bearing connection 25 via linkage 32 such that actuators 18 may apply a linear force to housing 25 along axis 21 and pushrod connection 20 is mechanically coupled to vehicle control stick 60 at spherical bearing connection 20. However, in this embodiment control stick 60 is mechanically coupled to swashplate 116 of rotor assembly 180 via linkage 161. Rotor assembly 180 includes rotor hub 181 that is driven about a center axis of rotation. Rotor hub 181 includes rotor blades 182a, 182b, 182c and 182d rotationally mounted to rotor hub 181 and coupled to swashplate 116 via pitch links. Swashplate 116 is lifted and tilted by actuators 18a and 18b to control the pitch of rotor blades 182a, 182b, 182c and 182d.

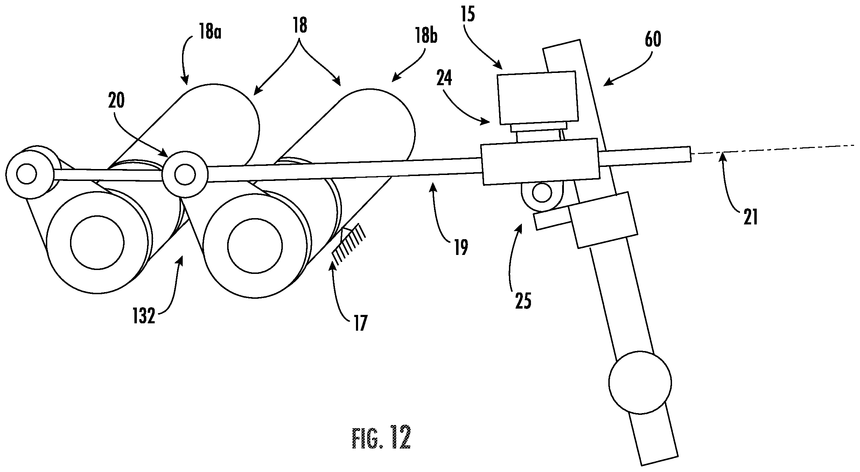

FIG. 12 is a schematic view of disconnect mechanism 15 coupled in an alternative arrangement between actuators 18 and control stick 60. In this arrangement, pushrod 19 is mechanically coupled to rotary actuators 18a and 18b at spherical bearing connection 20 via linkage 132 such that actuators 18 may apply a linear force to pushrod 19 along axis 21. Housing 24 is mechanically coupled to vehicle control stick 60 at spherical bearing connection 25. Control stick 60 may be in turn mechanically coupled to a flight control surface or a flight control mechanism for an aircraft. Disconnect mechanism 15 is otherwise as described above.

While disconnect mechanism 15 is shown coupled between at least one actuator and an object driven by such actuator by linkages 32, 132, 60, 61 and/or 161, other types or linkages and linkage combinations may be employed as alternatives. For example, and without limitation, the disconnect mechanism may be mechanically coupled between an actuator and a driven object via one or more linkages, belts, gears, pulleys, chains, sprockets, and/or any other types of suitable couplers configured to physically or mechanically link the subject elements.

FIGS. 13 and 14 show a longitudinal vertical cross-sectional view of alternative rotational embodiment 115. This embodiment is similar to disconnect mechanism 15 described above with respect to tower 29 and plunger 50. However, in this embodiment, instead of pushrod 19 providing an axial force application (linear motion), rotary wheel or shaft 119 is employed to provide a rotational torque application (rotary motion), with housing tube 126 rotated 90 degrees about axis 55 to provide a properly orientated interface 149 between roller 51 and detent 122 of rotary shaft 119. As shown in FIGS. 13 and 14, rod tube 26 and pushrod 19 have been replaced with shaft tube 126 and rotary shaft 119 having circumferential and axially-extending detent or groove 122 in engagement with roller 51 of plunger 50. The assembly otherwise includes a similar automatic and adjustable magnetic capture mechanism. On rotational breakout, the assembly will stop delivering torque as opposed to linear force.

As shown in FIG. 13, when roller 51 of spring loaded plunger 50 engages detent 122 of rotary shaft 119 at interface 149, torque applied to rotary shaft 119 about rotary axis 121 causes a resultant force on plunger 50 with a component along vertical axis of translation 55 of plunger 50. The ratio of shaft torque to plunger force is a function of the contact angle between roller end 51 of plunger 50 and sloped detent walls 122a and 122c of detent 122 of shaft 119. As shown in FIG. 14, when the torque applied to rotary shaft 119 is higher than a desired threshold, the resultant vertical force on plunger 50 will overcome the opposed spring preload of spring 34 on plunger 50 and cause plunger 50 to translate up out of detent or groove 122 in rotary shaft 119, which constitutes a "breakout" or disengagement.

Upon breakout or disengagement, plunger 50 automatically latches in the disengaged position shown in FIG. 14 and rotary shaft 119 rotates freely in housing tube 126 of housing 124 until the latch is reset. In particular, when plunger 50 is forced out of detent 122, or retracted, steel pole piece 53 affixed to the top end of plunger 50 is translated into close proximity to disc magnet 44 positioned in end cap 43 of housing 124 at a preset distance above the top of plunger 50. When a breakout occurs, magnet 44 automatically captures plunger pole piece 53 and plunger 50 is automatically retained in the disengaged position and held from re-engaging detent 122 of rotary shaft 119 in the event that rotary shaft 119 rotationally realigns below roller 51 of plunger 50.

While embodiments of the disconnect mechanism have been shown and described, and several modifications discussed, persons skilled in this art will readily appreciate that various additional changes may be made without departing from the scope of the invention as defined by the appended independent claims.

## Claims

1. An actuator transfer assembly comprising:
an actuator (18);
a driven object (16, 60, 116);
a pushrod (19) configured to translate linearly and provide an axial force between said actuator and said driven object;
a disconnect housing (24) between said pushrod and either said actuator or said driven object;
a transfer member (50) supported by said disconnect housing;
said transfer member movable relative to said disconnect housing from a first position in mechanical engagement with said pushrod at a mechanical interface (49) such that said disconnect housing translates linearly with said pushrod and a second position in mechanical disengagement from said pushrod at said mechanical interface such that said disconnect housing does not translate linearly with said pushrod;
a bias element (34) biasing said transfer member towards said first position with said pushrod;
a retainer (44, 53) supported by said disconnect housing and configured to automatically retain said transfer member in said second position when said transfer member moves from said first position to said second position; and
wherein said transfer member is configured to move from said first position to said second position when an axial force on said pushrod exceeds a predetermined threshold breakout force.

2. The actuator transfer assembly as set forth in claim 1, wherein said transfer member comprises a plunger (50) having a roller (51) at a first end and said pushrod comprises a detent (22) configured to receive said roller at said mechanical interface.

3. An actuator transfer assembly comprising:
an actuator;
a driven object;
a shaft (119) configured to rotate about an axis (121) and provide a torque between said actuator and said driven object;
a disconnect housing (124) between said shaft and either said actuator or said driven object;
a transfer member (50) supported by said disconnect housing;
said transfer member movable relative to said disconnect housing from a first position in mechanical engagement with said shaft at a mechanical interface (149) such that said disconnect housing rotates about said axis with said shaft and a second position in mechanical disengagement from said shaft at said mechanical interface such that said disconnect housing does not rotate about said axis with said shaft;
a bias element (34) biasing said transfer member towards said first position with said shaft;
a retainer (44,53) supported by said disconnect housing and configured to automatically retain said transfer member in said second position when said transfer member moves from said first position to said second position; and
wherein said transfer member is configured to move from said first engaged position to said second disengaged position when a torque on said shaft exceeds a predetermined threshold breakout torque.

4. The actuator transfer assembly as set forth in claim 3, wherein said transfer member comprises a plunger having a roller at a first end and said shaft comprises a detent configured to receive said roller at said mechanical interface.

5. The actuator transfer assembly as set forth in claim 1 or claim 3, wherein said retainer comprises:
a magnet (44) connected to said disconnect housing;
a pole piece (53) connected to said transfer member; and
said magnet and said pole piece configured such that a magnetic attractive force of said magnet on said pole piece exceeds an opposing bias force of said bias element when said transfer member is in said second position.

6. The actuator transfer assembly as set forth in claim 5, wherein said retainer comprises a gap (46) between said magnet and said pole piece when said transfer member is in said first position.

7. The actuator transfer assembly as set forth in claim 5, wherein:
said transfer member comprises a plunger (50) having a roller (51) at a first end;
said pushrod or said shaft comprises a detent (122) configured to receive said roller at said mechanical interface; and
said pole piece comprises a steel disc (53) at a second end of said plunger.

8. The actuator transfer assembly as set forth in claim 5, comprising:
a magnetic force adjustment mechanism (40) configured to adjust said magnetic attractive force of said magnet on said pole piece when said transfer member is in said second position; and
a bias force adjustment mechanism (35) configured to adjust said bias force of said bias element on said transfer member when said transfer member is in said first position.

9. The actuator transfer assembly as set forth in claim 8, wherein said magnetic force adjustment mechanism comprises a magnetic adjustment cup (40) supporting said magnet and in direct or indirect threaded engagement with said disconnect housing such that a gap (46) between said pole piece and said magnet when said transfer member is in said first position may be adjusted by rotation of said magnetic adjustment cup relative to said disconnect housing.

10. The actuator transfer assembly as set forth in claim 9, wherein:
said bias force adjustment mechanism comprises a spring adjustment cup (35);
said bias element comprises a spring (34) in compression between said spring adjustment cup and said transfer member; and
said spring adjustment cup is in direct or indirect threaded engagement with said disconnect housing such that said compression of said spring between said spring adjustment cup and said transfer member when said transfer member is in said first position may be adjusted by rotation of said spring adjustment cup relative to said disconnect housing.

11. The actuator transfer assembly as set forth in claim 10, wherein said spring adjustment cup is in threaded engagement between said magnetic adjustment cup and said disconnect housing and said magnetic adjustment cup is in indirect threaded engagement with said disconnect housing;
and optionally:
wherein an inner surface (41) of said magnetic adjustment cup is in direct threaded engagement with an outer surface (37) of said spring adjustment cup and an inner surface (36) of said spring adjustment cup is in direct threaded engagement with an outer surface (31) of said disconnect housing.

12. The actuator transfer assembly as set forth in claim 5, comprising:
a bias force adjustment mechanism (35) configured to adjust said bias force of said bias element on said transfer member when said transfer member is in said first position and comprising a spring adjustment cup (35) in direct threaded engagement with said disconnect housing such that said bias force of said bias element on said transfer member when said transfer member is in said first position may be adjusted by rotation of said spring adjustment cup relative to said disconnect housing; and
a magnetic force adjustment mechanism (40) configured to adjust said magnetic attractive force of said magnet on said pole piece when said transfer member is in said second position and comprises a magnetic adjustment cup (40) supporting said magnet and in direct threaded engagement with said spring adjustment cup such that a gap (46) between said pole piece and said magnet when said transfer member is in said first position may be adjusted by rotation of said magnetic adjustment cup and/or said spring adjustment cup relative to said disconnect housing:
and optionally wherein:
an inner surface (41) of said magnetic adjustment cup is in direct threaded engagement with an outer surface (37) of said spring adjustment cup;
an inner surface (36) of said spring adjustment cup is in direct threaded engagement with an outer surface (31) of said disconnect housing;
said threaded engagement of said inner surface of said magnetic adjustment cup and said outer surface of said spring adjustment cup comprises a first thread pitch; and
said threaded engagement of said inner surface of said spring adjustment cup and said outer surface of said disconnect housing comprises a second thread pitch different from said first thread pitch.

13. The actuator transfer assembly as set forth in claim 1 or claim 3, comprising a first linkage (32) between said disconnect housing and said actuator and a second linkage (60, 61, 161) between said pushrod or said shaft and said driven object.

14. The actuator transfer assembly as set forth in claim 1 or claim 3, wherein said driven object is selected from a group consisting of an aircraft flight control mechanism (60, 116) and an aircraft flight control surface (16).

15. The actuator transfer assembly as set forth in claim 14, wherein:
said driven object comprises said aircraft flight control surface and said flight control surface is selected from a group consisting of an elevator, a rudder, an aileron, a flap, a slat, a stabilizer, and a spoiler; or
said driven object comprises said aircraft flight control mechanism and said aircraft flight control mechanism is selected from a group consisting of a helicopter main rotor blade, a helicopter tail rotor blade, a helicopter main rotor swashplate, and a helicopter tail rotor swashplate.

## Patentansprüche

1. Aktuatorübertragungsanordnung, umfassend:
einen Aktuator (18);
ein angetriebenes Objekt (16, 60, 116);
eine Schubstange (19), die konfiguriert ist, um sich linear zu bewegen und eine Axialkraft zwischen dem Aktuator und dem angetriebenen Objekt bereitzustellen;
ein Trenngehäuse (24) zwischen der Schubstange und entweder dem Aktuator oder dem angetriebenen Objekt;
ein Übertragungselement (50), das von dem Trenngehäuse getragen wird;
wobei das Übertragungselement relativ zu dem Trenngehäuse aus einer ersten Position in mechanischem Eingriff mit der Schubstange an einer mechanischen Schnittstelle (49), so dass sich das Trenngehäuse linear mit der Schubstange bewegt, und einer zweiten Position in mechanischer Loslösung aus der Schubstange an der mechanischen Schnittstelle, so dass sich das Trenngehäuse nicht linear mit der Schubstange bewegt, beweglich ist;
ein Vorspannelement (34), welches das Übertragungselement in Richtung der ersten Position mit der Schubstange vorspannt;
einen Halter (44, 53), der von dem Trenngehäuse getragen wird und konfiguriert ist, um das Übertragungselement automatisch in der zweiten Position zu halten, wenn sich das Übertragungselement aus der ersten Position in die zweite Position bewegt; und
wobei das Übertragungselement konfiguriert ist, um sich aus der ersten Position in die zweite Position zu bewegen, wenn eine Axialkraft auf die Schubstange einen vorbestimmten Schwellenwert der Ausbrechkraft überschreitet.

2. Aktuatorübertragungsanordnung nach Anspruch 1, wobei das Übertragungselement einen Kolben (50), der eine Rolle (51) an einem ersten Ende aufweist, umfasst und die Schubstange eine Arretierung (22) umfasst, die konfiguriert ist, um die Rolle an der mechanischen Schnittstelle aufzunehmen.

3. Aktuatorübertragungsanordnung, umfassend:
einen Aktuator;
ein angetriebenes Objekt;
eine Welle (119), die konfiguriert ist, um sich um eine Achse (121) zu drehen und ein Drehmoment zwischen dem Aktuator und dem angetriebenen Objekt bereitzustellen;
ein Trenngehäuse (124) zwischen der Welle und entweder dem Aktuator oder dem angetriebenen Objekt:
ein Übertragungselement (50), das von dem Trenngehäuse getragen wird;
wobei das Übertragungselement relativ zu dem Trenngehäuse aus einer ersten Position in mechanischem Eingriff mit der Welle an einer mechanischen Schnittstelle (149), so dass sich das Trenngehäuse mit der Welle um die Achse dreht, und einer zweiten Position in mechanischer Loslösung aus der Welle an der mechanischen Schnittstelle, so dass sich das Trenngehäuse nicht mit der Welle um die Achse dreht, beweglich ist;
ein Vorspannelement(34), welches das Übertragungselement in Richtung der ersten Position mit der Welle vorspannt:
einen Halter (44,53), der von dem Trenngehäuse getragen wird und konfiguriert ist, um das Übertragungselement automatisch in der zweiten Position zu halten, wenn sich das Übertragungselement aus der ersten Position in die zweite Position bewegt; und
wobei das Übertragungselement konfiguriert ist, um sich aus der ersten eingerasteten Position in die zweite ausgerastete Position zu bewegen, wenn ein Drehmoment an der Welle einen vorbestimmten Schwellwert des Ausbrechdrehmoments überschreitet.

4. Aktuatorübertragungsanordnung nach Anspruch 3, wobei das Übertragungselement einen Kolben, der eine Rolle an einem ersten Ende aufweist, umfasst und die Welle eine Arretierung umfasst, die konfiguriert ist, um die Rolle an der mechanischen Schnittstelle aufzunehmen.

5. Aktuatorübertragungsanordnung nach Anspruch 1 oder Anspruch 3, wobei der Halter umfasst:
einen Magneten (44), der mit dem Trenngehäuse verbunden ist;
ein Polstück (53), das mit dem Übertragungselement verbunden ist; und
wobei der Magnet und das Polstück so konfiguriert sind, dass eine magnetische Anziehungskraft des Magneten auf das Polstück eine entgegengesetzte Vorspannungskraft des Vorspannungselements übersteigt, wenn sich das Übertragungselement in der zweiten Position befindet.

6. Aktuatorübertragungsanordnung nach Anspruch 5, wobei der Halter einen Spalt (46) zwischen dem Magneten und dem Polstück umfasst, wenn sich das Übertragungselement in der ersten Position befindet.

7. Aktuatorübertragungsanordnung nach Anspruch 5, wobei:
das Übertragungselement einen Kolben (50) umfasst, der an einem ersten Ende eine Rolle (51) aufweist;
die Schubstange oder die Welle eine Arretierung (122) umfasst, die konfiguriert ist, um die Rolle an der mechanischen Schnittstelle aufzunehmen; und
das Polstück eine Stahlscheibe (53) an einem zweiten Ende des Kolbens umfasst.

8. Aktuatorübertragungsanordnung nach Anspruch 5, umfassend:
einen Magnetkrafteinstellmechanismus (40), der konfiguriert ist, um die magnetische Anziehungskraft des Magneten auf das Polstück einzustellen, wenn sich das Übertragungselement in der zweiten Position befindet; und
einen Vorspannkrafteinstellmechanismus (35), der konfiguriert ist, um die Vorspannkraft des Vorspannelements auf das Übertragungselement einzustellen, wenn sich das Übertragungselement in der ersten Position befindet.

9. Aktuatorübertragungsanordnung nach Anspruch 8, wobei der Magnetkrafteinstellmechanismus eine magnetische Einstellschale (40) umfasst, die den Magneten trägt und in direktem oder indirektem Gewindeeingriff mit dem Trenngehäuse steht, so dass ein Spalt (46) zwischen dem Polstück und dem Magneten, wenn sich das Übertragungselement in der ersten Position befindet, durch Drehung der magnetischen Einstellschale relativ zu dem Trenngehäuse eingestellt werden kann.

10. Aktuatorübertragungsanordnung nach Anspruch 9, wobei:
der Vorspannkrafteinstellmechanismus eine Federeinstellschale (35) umfasst;
das Vorspannelement eine Feder (34) in Kompression zwischen der Federeinstellschale und dem Übertragungselement umfasst; und
die Federeinstellschale in direktem oder indirektem Gewindeeingriff mit dem Trenngehäuse steht, so dass die Kompression der Feder zwischen der Federeinstellschale und dem Übertragungselement, wenn sich das Übertragungselement in der ersten Position befindet, durch Drehung der Federeinstellschale relativ zu dem Trenngehäuse eingestellt werden kann.

11. Aktuatorübertragungsanordnung nach Anspruch 10, wobei die Federeinstellschale in Gewindeeingriff zwischen der magnetischen Einstellschale und dem Trenngehäuse steht und die magnetische Einstellschale in indirektem Gewindeeingriff mit dem Trenngehäuse steht;
und optional:
wobei eine innere Oberfläche (41) der magnetischen Einstellschale in direktem Gewindeeingriff mit einer äußeren Oberfläche (37) der Federeinstellschale steht und eine innere Oberfläche (36) der Federeinstellschale in direktem Gewindeeingriff mit einer äußeren Oberfläche (31) des Trenngehäuses steht.

12. Aktuatorübertragungsanordnung nach Anspruch 5, umfassend:
einen Vorspannkrafteinstellmechanismus (35), der konfiguriert ist, um die Vorspannkraft des Vorspannelements auf das Übertragungselement einzustellen, wenn sich das Übertragungselement in der ersten Position befindet, und der eine Federeinstellschale (35) umfasst, die in direktem Gewindeeingriff mit dem Trenngehäuse ist, so dass die Vorspannkraft des Vorspannelements auf das Übertragungselement, wenn sich das Übertragungselement in der ersten Position befindet, durch Drehung der Federeinstellschale relativ zu dem Trenngehäuse eingestellt werden kann; und
einen Magnetkrafteinstellmechanismus (40), der konfiguriert ist, um die magnetische Anziehungskraft des Magneten auf das Polstück einzustellen, wenn sich das Übertragungselement in der zweiten Position befindet, und der eine magnetischen Einstellschale (40) umfasst, die den Magneten trägt und in direktem Gewindeeingriff mit der Federeinstellschale steht, so dass ein Spalt (46) zwischen dem Polstück und dem Magneten, wenn sich das Übertragungselement in der ersten Position befindet, durch Drehung der magnetischen Einstellschale und/oder der Federeinstellschale relativ zu dem Trenngehäuse eingestellt werden kann:
und optional wobei:
eine innere Oberfläche (41) der magnetischen Einstellschale in direktem Gewindeeingriff mit einer äußeren Oberfläche (37) der Federeinstellschale steht;
eine innere Oberfläche (36) der Federeinstellschale in direktem Gewindeeingriff mit einer äußeren Oberfläche (31) des Trenngehäuses steht;
der Gewindeeingriff der inneren Oberfläche der magnetischen Einstellschale und der äußeren Oberfläche der Federeinstellschale eine erste Gewindesteigung umfasst; und
der Gewindeeingriff der inneren Oberfläche der Federeinstellschale und der äußeren Oberfläche des Trenngehäuses eine zweite Gewindesteigung umfasst, die sich von der ersten Gewindesteigung unterscheidet.

13. Aktuatorübertragungsanordnung nach Anspruch 1 oder Anspruch 3, umfassend eine erste Verbindung (32) zwischen dem Trenngehäuse und dem Aktuator und eine zweite Verbindung (60, 61, 161) zwischen der Schubstange oder der Welle und dem angetriebenen Objekt.

14. Aktuatorübertragungsanordnung nach Anspruch 1 oder Anspruch 3, wobei das angetriebene Objekt ausgewählt ist aus einer Gruppe bestehend aus einem Luftfahrzeugflugsteuerungsmechanismus (60, 116) und einer Luftfahrzeugflugsteuerungsoberfläche (16).

15. Aktuatorübertragungsanordnung nach Anspruch 14, wobei:
das angetriebene Objekt die Luftfahrzeugflugsteuerungsoberfläche umfasst und die Flugsteuerungsoberfläche ausgewählt ist aus einer Gruppe bestehend aus einem Höhenruder, einem Seitenruder, einem Querruder, einer Klappe, einem Vorflügel, einem Leitwerk und einem Spoiler; oder
das angetriebene Objekt den Luftfahrzeugflugsteuerungsmechanismus umfasst und der Luftfahrzeugflugsteuerungsmechanismus ausgewählt ist aus einer Gruppe bestehend aus einem Hubschrauberhauptrotorblatt, einem Hubschrauberheckrotorblatt, einer Hubschrauberhauptrotortaumelscheibe und einer Hubschrauberheckrotortaumelscheibe.

## Revendications

1. Ensemble de transfert d'actionneur comprenant :
un actionneur (18) ;
un objet entraîné (16, 60, 116) ;
une tige-poussoir (19) conçue pour se déplacer linéairement et fournir une force axiale entre ledit actionneur et ledit objet entraîné ;
un boîtier de débranchement (24) entre ladite tige-poussoir et ledit actionneur ou ledit objet entraîné ;
un organe de transfert (50) supporté par ledit boîtier de débranchement ;
ledit organe de transfert peut être déplacé par rapport audit boîtier de débranchement d'une première position en engagement mécanique avec ladite tige-poussoir au niveau d'une interface mécanique (49) de telle sorte que ledit boîtier de débranchement se déplace linéairement avec ladite tige-poussoir et d'une seconde position en désengagement mécanique de ladite tige-poussoir au niveau de ladite interface mécanique de telle sorte que ledit boîtier de débranchement ne se déplace pas linéairement avec ladite tige-poussoir ;
un élément de sollicitation (34) sollicitant ledit organe de transfert vers ladite première position à l'aide de ladite tige-poussoir ;
un élément de retenue (44, 53) supporté par ledit boîtier de débranchement et conçu pour retenir automatiquement ledit organe de transfert dans ladite seconde position lorsque ledit organe de transfert passe de ladite première position à ladite seconde position ; et
dans lequel ledit organe de transfert est conçu pour passer de ladite première position à la seconde position lorsqu'une force axiale exercée sur ladite tige-poussoir dépasse un seuil d'effort de décollement prédéterminé.

2. Ensemble de transfert d'actionneur selon la revendication 1, dans lequel ledit organe de transfert comprend un poussoir (50) présentant un galet (51) à une première extrémité et ladite tige-poussoir comprend un cran (22) conçu pour recevoir ledit galet au niveau de ladite interface mécanique.

3. Ensemble de transfert d'actionneur comprenant :
un actionneur ;
un objet entraîné ;
un arbre (119) conçu pour tourner autour d'un axe (121) et fournir un couple entre ledit actionneur et ledit objet entraîné ;
un boîtier de débranchement (124) entre ledit arbre et ledit actionneur ou ledit objet entraîné :
un organe de transfert (50) supporté par ledit boîtier de débranchement ;
ledit organe de transfert peut être déplacé par rapport audit boîtier de débranchement à partir d'une première position en engagement mécanique avec ledit arbre au niveau d'une interface mécanique (149) de telle sorte que ledit boîtier de débranchement tourne autour dudit axe avec ledit arbre et une seconde position en désengagement mécanique dudit arbre au niveau de ladite interface mécanique de telle sorte que ledit boîtier de débranchement ne tourne pas autour dudit axe avec ledit arbre ;
un élément de sollicitation (34) sollicitant ledit organe de transfert vers ladite première position avec ledit arbre :
un élément de retenue (44,53) supporté par ledit boîtier de débranchement et conçu pour retenir automatiquement ledit organe de transfert dans ladite seconde position lorsque ledit organe de transfert passe de ladite première position à ladite seconde position ; et
dans lequel ledit organe de transfert est conçu pour passer de ladite première position engagée vers ladite seconde position désengagée lorsqu'un couple sur ledit arbre dépasse un seuil de couple de décollement prédéterminé.

4. Ensemble de transfert d'actionneur selon la revendication 3, dans lequel ledit organe de transfert comprend un poussoir présentant un galet à une première extrémité et ledit arbre comprend un cran conçu pour recevoir ledit galet au niveau de ladite interface mécanique.

5. Ensemble de transfert d'actionneur selon la revendication 1 ou la revendication 3, dans lequel ledit élément de retenue comprend :
un aimant (44) relié à ce boîtier de débranchement ;
une pièce polaire (53) reliée au dit organe de transfert ; et
ledit aimant et ladite pièce polaire sont conçus de telle sorte qu'une force d'attraction magnétique dudit aimant sur ladite pièce polaire dépasse une force de sollicitation opposée dudit élément de sollicitation lorsque ledit organe de transfert est dans ladite seconde position.

6. Ensemble de transfert d'actionneur selon la revendication 5, dans lequel ledit élément de retenue comprend un espace (46) entre ledit aimant et ladite pièce polaire lorsque ledit organe de transfert est dans ladite première position.

7. Ensemble de transfert d'actionneur selon la revendication 5, dans lequel :
ledit organe de transfert comprend un poussoir (50) présentant un galet (51) à une première extrémité ;
ladite tige-poussoir ou ledit arbre comprend un cran (122) conçu pour recevoir ledit galet au niveau de ladite interface mécanique ; et
ladite pièce polaire comprend un disque en acier (53) à une seconde extrémité dudit poussoir.

8. Ensemble de transfert d'actionneur selon la revendication 5, comprenant :
un mécanisme d'ajustement de force magnétique (40) conçu pour ajuster ladite force d'attraction magnétique dudit aimant sur ladite pièce polaire lorsque ledit organe de transfert est dans la seconde position ; et
un mécanisme d'ajustement de force de sollicitation (35) conçu pour ajuster ladite force de sollicitation dudit élément de sollicitation sur ledit organe de transfert lorsque ledit organe de transfert est dans ladite première position.

9. Ensemble de transfert d'actionneur selon la revendication 8, dans lequel ledit mécanisme d'ajustement de force magnétique comprend une coupelle d'ajustement magnétique (40) supportant ledit aimant et en engagement fileté direct ou indirect avec ledit boîtier de débranchement de telle sorte qu'un espace (46) entre ladite pièce polaire et ledit aimant lorsque ledit organe de transfert est dans ladite première position peut être ajusté par rotation de ladite coupelle d'ajustement magnétique par rapport audit boîtier de débranchement.

10. Ensemble de transfert d'actionneur selon la revendication 9, dans lequel :
ledit mécanisme d'ajustement de force de sollicitation comprend une coupelle d'ajustement de ressort (35) ;
ledit élément de sollicitation comprend un ressort (34) en compression entre ladite coupelle d'ajustement de ressort et ledit organe de transfert ; et
ladite coupelle d'ajustement de ressort est en engagement fileté direct ou indirect avec ledit boîtier de débranchement de telle sorte que ladite compression dudit ressort entre ladite coupelle d'ajustement de ressort et ledit organe de transfert lorsque ledit organe de transfert est dans ladite première position peut être ajustée par rotation de ladite coupelle d'ajustement de ressort par rapport audit boîtier de débranchement.

11. Ensemble de transfert d'actionneur selon la revendication 10, dans lequel ladite coupelle d'ajustement de ressort est en engagement fileté entre ladite coupelle d'ajustement magnétique et ledit boîtier de débranchement et ladite coupelle d'ajustement magnétique est en engagement fileté indirect avec ledit boîtier de débranchement ;
et éventuellement :
dans lequel une surface interne (41) de ladite coupelle d'ajustement magnétique est en engagement fileté direct avec une surface externe (37) de ladite coupelle d'ajustement de ressort et une surface interne (36) de ladite coupelle d'ajustement de ressort est en engagement fileté direct avec une surface externe (31) dudit boîtier de débranchement.

12. Ensemble de transfert d'actionneur selon la revendication 5, comprenant :
un mécanisme d'ajustement de force de sollicitation (35) conçu pour régler ladite force de sollicitation dudit élément de sollicitation sur ledit organe de transfert lorsque ledit organe de transfert est dans ladite première position et comprenant une coupelle d'ajustement de ressort (35) en engagement direct avec ledit boîtier de débranchement de telle sorte que ladite force de sollicitation dudit élément de sollicitation sur ledit organe de transfert lorsque ledit organe de transfert est dans ladite première position peut être réglée par rotation de ladite coupelle d'ajustement de ressort par rapport audit boîtier de débranchement ; et
un mécanisme d'ajustement de force magnétique (40) conçu pour ajuster ladite force d'attraction magnétique dudit aimant sur ladite pièce polaire lorsque ledit organe de transfert est dans ladite seconde position et comprend une coupelle d'ajustement magnétique (40) supportant ledit aimant et en engagement fileté direct avec ladite coupelle d'ajustement de ressort de telle sorte qu'un espace (46) entre ladite pièce polaire et ledit aimant lorsque ledit organe de transfert est dans ladite première position peut être ajusté par rotation de ladite coupelle d'ajustement magnétique et/ou de ladite coupelle d'ajustement de ressort par rapport audit boîtier de débranchement :
et éventuellement, dans lequel :
une surface interne (41) de ladite coupelle d'ajustement magnétique est en engagement fileté direct avec une surface externe (37) de ladite coupelle d'ajustement de ressort ;
une surface interne (36) de ladite coupelle d'ajustement de ressort est en engagement fileté direct avec une surface externe (31) dudit boîtier de débranchement ;
ledit engagement fileté de ladite surface interne de ladite coupelle d'ajustement magnétique et de ladite surface externe de ladite coupelle d'ajustement de ressort comprend un premier pas de filetage ; et
ledit engagement fileté de ladite surface interne de ladite coupelle d'ajustement de ressort et de ladite surface externe dudit boîtier de débranchement comprend un second pas de filetage différent dudit premier pas de filetage.

13. Ensemble de transfert d'actionneur selon la revendication 1 ou la revendication 3, comprenant une première liaison (32) entre ledit boîtier de débranchement et ledit actionneur et une seconde liaison (60, 61, 161) entre ladite tige-poussoir ou ledit arbre et ledit objet entraîné.

14. Ensemble de transfert d'actionneur selon la revendication 1 ou la revendication 3, dans lequel ledit objet entraîné est choisi dans un groupe constitué d'un mécanisme de commande de vol d'aéronef (60, 116) et d'une surface de commande de vol d'aéronef (16).

15. Ensemble de transfert d'actionneur selon la revendication 14, dans lequel :
ledit objet entraîné comprend ladite surface de commande de vol d'aéronef et ladite surface de commande de vol est choisie dans un groupe constitué d'une gouverne de profondeur, d'une gouverne de direction, d'un aileron, d'un volet, d'un bec de bord d'attaque, d'un stabilisateur et d'un destructeur de portance ; soit
ledit objet entraîné comprend ledit mécanisme de commande de vol d'aéronef et ledit mécanisme de commande de vol d'aéronef est choisi dans un groupe constitué d'une pale de rotor principal d'hélicoptère, d'une pale de rotor de queue d'hélicoptère, d'un plateau cyclique de rotor principal d'hélicoptère et d'un plateau cyclique de rotor de queue d'hélicoptère.
